# FASCICULE DE BREVET EUROPEEN

(11) **EP 1 797 804 B1**
(45) Date de publication et mention de la délivrance du brevet: **01.11.2017**
(21) Numéro de dépôt: 06356140.1
(22) Date de dépôt: 07.12.2006
(51) Int. Cl.: A47J 43/07

(54) **Boitier d'appareil électroménager comportant un support de rangement pour accessoire plat**
Gehäuse für ein Küchengerät mit einer Ablage zum Unterbringen von flachen Zubehörteilen
Case for a household appliance comprising a support for storing a flat accessory

(30) Priorité: 13.12.2005 FR 0512590
(43) Date de publication de la demande: 20.06.2007
(73) Titulaire: SEB S.A., 69130 Ecully (FR)
(72) Inventeur: Smit, Robert, 65290 Louey (FR); Charles, Patrick, 65290 Louey (FR)
(74) Mandataire: Rivière, Sophie

(56) Documents cités:
- EP-A- 0 926 975
- EP-A1- 1 442 795
- FR-A- 2 862 199
- US-A- 4 456 185

## Description

La présente invention concerne le domaine technique des appareils électroménagers de préparation culinaire, et concerne plus particulièrement les appareils comportant un support de rangement pour accessoire plat.

Il est connu du document FR 2 862 199 un boîtier d'appareil électroménager de préparation culinaire comportant un support de rangement monté pivotant autour d'un axe vertical. Le support de rangement forme des logements prévus pour recevoir des accessoires plats. Les logements sont agencés horizontalement dans le support et présentent une ouverture d'introduction latérale. Un inconvénient d'une telle conception réside dans l'insuffisance de maintien des accessoires rangés dans ledit support. Les accessoires risquent de tomber dans l'appareil ou sur le plan de travail lorsque le support est déplacé.

Le but de la présente invention est de proposer un boîtier d'appareil électroménager de préparation culinaire, comportant un support de rangement pour accessoire plat, permettant d'éviter les risques de chute de l'accessoire plat hors du support de rangement lors de la manipulation du support de rangement.

Un but additionnel de la présente invention est de proposer un boîtier d'appareil électroménager de préparation culinaire, comportant un support de rangement extractible pour accessoire plat, prévu pour occuper deux positions de travail utilisant deux faces d'appui contiguës, permettant d'éviter les risques de chute de l'accessoire plat hors du support de rangement lors du basculement du boîtier.

Ces buts sont atteints avec un boîtier d'appareil électroménager de préparation culinaire comportant un support de rangement comprenant un logement prévu pour recevoir un accessoire plat rangé sur la tranche, le logement présentant une zone d'appui de fond et une ouverture prévue pour l'introduction de l'accessoire plat, le support de rangement étant monté pivotant par rapport au boîtier, le support de rangement étant susceptible d'occuper une position fermée et une position ouverte, le boîtier étant susceptible d'occuper une position de travail correspondant à une position de rangement dans laquelle le support de rangement est accessible, du fait que l'orientation du logement évolue par rapport à la verticale lorsque le support de rangement est déplacé de la position ouverte à la position fermée, et en ce qu'au moins une partie de la zone d'appui de fond reste agencée plus bas que l'ouverture lorsque le support de rangement est déplacé de la position ouverte à la position fermée. Ainsi la zone d'appui de fond supporte l'accessoire plat dans le logement lors des mouvements du support de rangement et/ou lors des mouvements du boîtier. Les risques d'échappement de l'accessoire plat hors du logement et de coincement de l'accessoire plat dans le boîtier peuvent ainsi être évités, notamment lorsque le support de rangement atteint la position fermée.

La position de travail du boîtier correspond à la position de rangement du boîtier. Le rangement est alors accessible. Le boîtier peut toutefois occuper une autre position de travail, dans laquelle le rangement n'est pas accessible.

Avantageusement le logement est incliné vers l'extérieur du boîtier en direction de l'ouverture lorsque le support de rangement occupe la position ouverte et que le boîtier occupe la position de rangement. Cette disposition permet de mieux visualiser l'outil plat rangé dans ledit logement, et de faciliter l'extraction de l'outil plat rangé dans ledit logement.

Le support de rangement est monté pivotant par rapport au boîtier. Le maintien du support de rangement dans le boîtier est ainsi facilité.

Avantageusement alors, le support de rangement est monté pivotant par rapport au boîtier selon un axe non-vertical par rapport à la position de rangement. Cette disposition permet de faciliter le rangement, les boîtiers d'appareils électroménagers de préparation culinaire étant généralement plus hauts que larges.

Avantageusement alors, le support de rangement est monté pivotant par rapport au boîtier selon un axe horizontal par rapport à la position de rangement. Cette disposition permet de simplifier l'implantation du support de rangement dans le boîtier.

Avantageusement alors le support de rangement pivote vers le bas pour atteindre la position ouverte. Cette disposition facilite l'accès de l'utilisateur au logement lorsque l'utilisateur regarde l'appareil par le dessus.

Avantageusement encore le boîtier comporte deux pivots prévus pour être engagés chacun dans un siège ménagé sur le support de rangement, chaque siège étant prolongé par un dégagement orienté vers le bas à partir dudit siège lorsque le support de rangement est en position ouverte. Le support de rangement peut pivoter autour des pivots engagés dans les sièges. Les dégagements permettent d'extraire les pivots du support de rangement pour retirer le support de rangement du boîtier. Le support de rangement peut aussi comporter deux pivots prévus pour être engagés chacun dans un siège ménagé sur le boîtier, chaque siège étant prolongé par un dégagement orienté vers le haut à partir dudit siège lorsque le boîtier est en position de rangement.

Avantageusement encore le support de rangement comporte un organe de blocage prévu pour coopérer avec un organe d'arrêt issu du boîtier lorsque le support de rangement occupe la position fermée. Cette disposition permet de maintenir en place le support de rangement notamment lors de l'utilisation de l'appareil.

Avantageusement encore, le boîtier est configuré basculant entre une première configuration dans laquelle le support de rangement est disposé sur une face latérale du boîtier et une deuxième configuration dans laquelle le support de rangement est disposé sous une face d'appui du boîtier. Chaque configuration du boîtier correspond à une position de travail. Le support de rangement peut ainsi être monté mobile par rapport au boîtier, sans être monté pivotant par rapport au boîtier. Le support de rangement peut notamment être monté coulissant par rapport au boîtier.

Avantageusement encore, l'orientation du logement évolue par rapport à la verticale lors des déplacements du support de rangement par rapport au plan de travail sur lequel est posé le boîtier. En d'autres termes, le support de rangement n'évolue pas uniquement en rotation autour d'un axe vertical, pour les mouvements du support de rangement entre la position ouverte et la position fermée, ou lors des mouvements du boîtier entre la position de rangement et la position de travail. Une telle configuration est encore plus propice aux risques précités. Les caractéristiques de l'invention sont particulièrement intéressantes dans une telle configuration.

Avantageusement, l'accessoire plat en place dans le logement dépasse partiellement du logement. Cette disposition permet de faciliter la préhension de l'accessoire plat, tout en réduisant les dimensions du logement.

Avantageusement, la profondeur du logement est inférieure à la moitié de la hauteur de l'accessoire plat. Cette disposition permet de faciliter la préhension de l'accessoire plat, notamment lorsque l'accessoire plat est en forme de disque.

Selon une forme de réalisation avantageuse, l'accessoire plat est en forme de disque. L'accessoire plat est par exemple un disque perforé formant une grille pour l'extrusion de la viande hachée.

L'invention sera mieux comprise à l'étude d'un exemple de réalisation, pris à titre nullement limitatif, illustré dans les figures annexées, dans lesquelles :
- la figure 1 est une vue en perspective d'un exemple de réalisation d'un appareil électroménager de préparation culinaire comportant un boîtier selon l'invention occupant une position de travail, le support de rangement étant en position fermée,
- la figure 2 est une vue partielle en coupe du boîtier et du support de rangement illustrés à la figure 1,
- la figure 3 est une vue en perspective de l'appareil illustré à la figure 1, dans laquelle le support de rangement occupe une position ouverte.
- la figure 4 est une vue partielle en coupe du boîtier et du support de rangement illustrés à la figure 3,
- la figure 5 est une vue en perspective de l'appareil illustré aux figures 1 et 3, dans laquelle le support de rangement a été retiré du boîtier, les accessoires étant représentés sortis dudit support de rangement,
- la figure 6 est une vue agrandie du support de rangement visible sur la figure 5,
- la figure 7 est une vue en perspective de l'appareil illustré aux figures 1, 3 et 5, dans laquelle le boîtier occupe une autre position de travail.

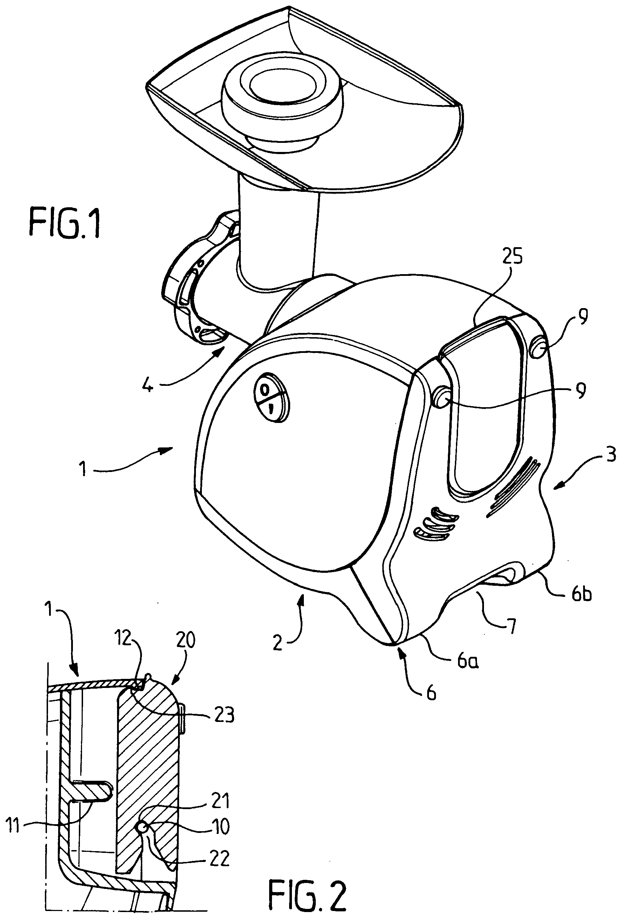

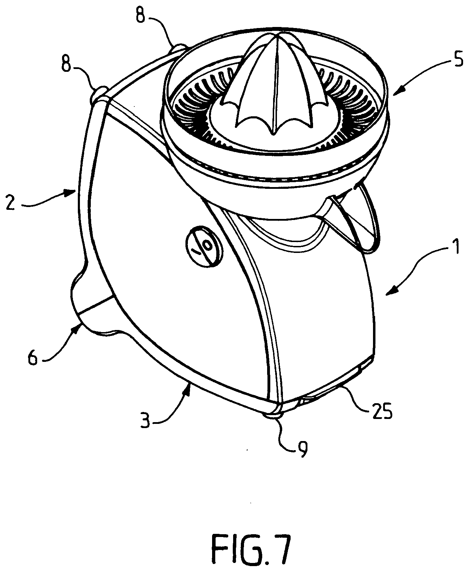

L'appareil électroménager de préparation culinaire illustré aux figures 1 à 7 comporte un boîtier présentant une sortie d'entraînement prévue pour entraîner en rotation un outil rotatif. La sortie d'entraînement est entraînée par un moteur logé dans le boîtier 1. Le boîtier 1 comporte deux faces d'appui 2, 3 et peut occuper deux positions de travail. Dans la première position de travail illustrée aux figures 1, 3 et 5, le boîtier repose sur la face d'appui 2. Le boîtier 1 est utilisé avec un bloc de coupe 4 prévu pour hacher les aliments. La sortie d'entraînement du boîtier 1 est alors agencée horizontalement. Dans la deuxième position de travail illustrée à la figure 7, le boîtier 1 est utilisé avec un accessoire presse-agrumes 5. La sortie d'entraînement du boîtier 1 est alors agencée verticalement.

La face d'appui 2 est reliée à l'autre face d'appui 3 par un arrondi 6 permettant le basculement du boîtier 1. Plus particulièrement, l'arrondi 6 est divisé en deux zones 6a, 6b séparées par une échancrure 7. La face d'appui 2 et l'autre face d'appui 3 comportent chacune deux pieds amortisseurs 8, 9.

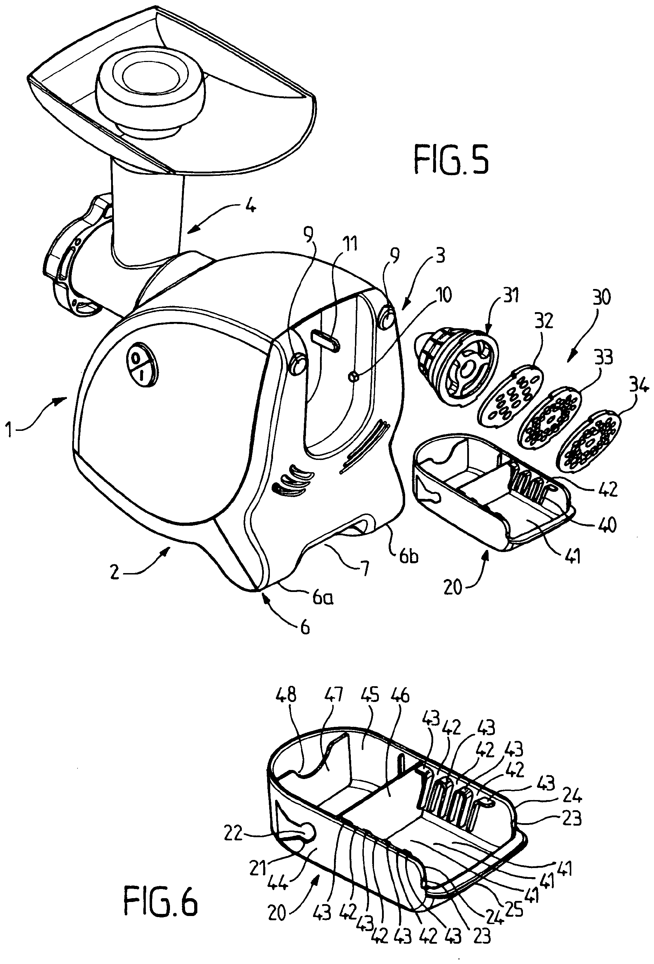

Le boîtier 1 comporte un support de rangement 20, mieux visible sur les figures 5 et 6. Le support de rangement 20 est prévu pour recevoir plusieurs éléments 30 destinés à être utilisés avec le bloc de coupe 4. Les éléments 30 comprennent un accessoire 31 de forme tronconique, prévu pour la préparation du kebbé, et trois accessoires plats 32, 33, 34 formant des grilles munies de trous de tailles différentes. A titre de variante, les accessoires plats 32, 33, 34 peuvent présenter toute forme appropriée.

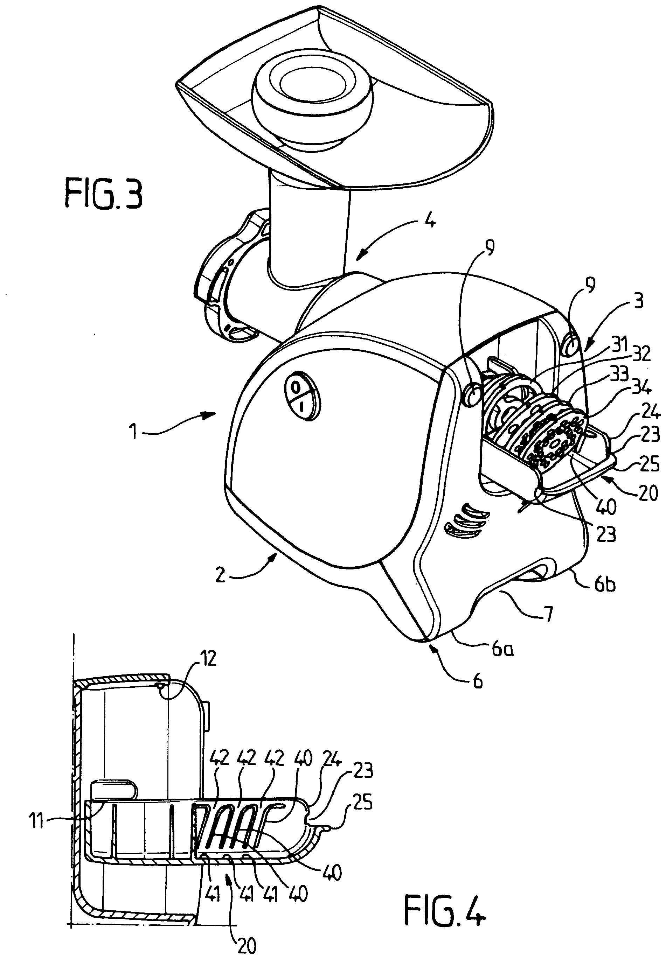

Le support de rangement 20 comprend trois logements 40, visibles sur la figure 4, chaque logement 40 étant prévu pour recevoir un des accessoires plats 32, 33, 34 rangé sur la tranche. Chaque logement 40 présente une zone d'appui inférieur 41, et une ouverture 42 prévue pour l'introduction dudit accessoire plat 32, 33, 34. Plus particulièrement, chacune des zones d'appui de fond 41 est formée par le fond du support de rangement 20. Chaque logement 40 est défini par des nervures 43 ménagées sur la face interne de parois latérales 44 du support de rangement 20. Le support de rangement 20 comporte un autre logement 45 prévu pour recevoir l'accessoire 31 de forme tronconique. L'autre logement est délimité par une paroi transversale 46. Une autre paroi transversale 47 présente une encoche 48 prévue pour supporter l'accessoire 31 de forme tronconique.

A titre de variante, le support de rangement 20 peut comporter au moins un logement prévu pour recevoir un accessoire plat rangé sur la tranche.

Le support de rangement 20 est susceptible d'occuper une position fermée illustrée aux figures 1, 2 et 7, et une position ouverte, illustrée aux figures 3 et 4. Le support de rangement 20 peut être extrait du boîtier 1, tel que représenté à la figure 5.

Le boîtier 1 est susceptible d'occuper une première position de travail illustrée aux figures 1, 3 et 5, dans laquelle le support de rangement 20 est accessible, et une deuxième position de travail, illustrée à la figure 7 dans laquelle le support de rangement 20 n'est pas accessible. Ainsi le boîtier 1 est susceptible d'occuper une position de travail dans laquelle le support de rangement 20 n'est pas nécessairement accessible.

Le boîtier 1 est susceptible d'occuper une position de rangement, illustrée à la figure 3, dans laquelle le support de rangement 20 est accessible. La première position de travail du boîtier 1 illustrée à la figure 1 correspond à la position de rangement du boîtier 1 illustrée à la figure 3.

Tel que visible sur la figure 3, les accessoires plats 32, 33, 34 en place dans les logements 40 dépassent partiellement desdits logements. La profondeur des logements 40 est inférieure à la moitié de la hauteur des accessoires plats 32, 33,34.

Le support de rangement 20 est monté pivotant par rapport au boîtier 1. Le boîtier 1 comporte deux pivots 10 prévus pour être engagés chacun dans un siège 21 ménagé sur le support de rangement 20. Les sièges 21 sont ménagés sur les faces latérales externes du support de rangement 20.

Le support de rangement 20 est monté pivotant par rapport au boîtier 1 selon un axe non-vertical par rapport à la position de rangement, plus particulièrement selon un axe horizontal par rapport à la position de rangement. Le support de rangement 20 pivote vers le bas pour atteindre la position ouverte, tel que représenté à la figure 3. Le support de rangement 20 en position ouverte vient en butée contre un élément d'arrêt 11 issu du boîtier 1.

Chaque siège 21 est prolongé par un dégagement 22 orienté vers le bas à partir dudit siège lorsque le support de rangement 20 est en position ouverte. Le support de rangement 20 peut pivoter autour des pivots 10 engagés dans les sièges 21. Les dégagements 22 permettent d'extraire les pivots 10 du support de rangement 20 pour retirer le support de rangement 20 du boîtier 1. Le support de rangement 20 est ainsi amovible.

A titre de variante le support de rangement 20 peut comporter deux pivots prévus pour être engagés chacun dans un siège ménagé sur le boîtier 1, chaque siège étant prolongé par un dégagement orienté vers le haut à partir dudit siège lorsque le boîtier 1 est en position de rangement.

Le support de rangement 20 comporte deux organes de blocage 23 prévus chacun pour coopérer avec un organe d'arrêt 12 issu du boîtier lorsque le support de rangement 20 occupe la position fermée. Plus particulièrement, les organes de blocage 23 sont formés par des échancrures dans deux parois frontales latérales 24 du support de rangement 20 ; les organes d'arrêt 12 sont formés par des ergots ménagés sur une face interne du boîtier 1.

A titre de variante, le support de rangement 20 peut comporter au moins un organe de blocage 23 prévu pour coopérer avec un organe d'arrêt 12 issu du boîtier 1 lorsque le support de rangement 20 occupe la position fermée.

Le support de rangement 20 comporte un organe de manoeuvre 25 reliant les deux parois frontales latérales 24. L'organe de manoeuvre 25 dépasse légèrement de la paroi du boîtier 1 pour faciliter la préhension.

Le fonctionnement de la présente invention est le suivant.

Le boîtier 1 est configuré basculant entre une première configuration dans laquelle le support de rangement 20 est disposé sur une face latérale du boîtier 1, tel que visible sur les figures 1 et 3, et une deuxième configuration dans laquelle le support de rangement 20 est disposé sous une face d'appui du boîtier 1, tel que visible sur la figure 7. Chaque configuration du boîtier correspond à une position de travail.

Le support de rangement 20 est monté mobile entre la position fermée représentée aux figures 1 et 2 et la position ouverte représentée aux figures 3 et 4. Plus particulièrement, le support de rangement 20 est monté pivotant dans le boîtier 1 grâce aux ergots 10 engagés dans les sièges 21.

Le support de rangement 20 pivote par rapport au boîtier 1 entre la position fermée représentée à la figure 1 et la position ouverte représentée à la figure 3. L'orientation des logements 40 évolue par rapport à la verticale lors des déplacements du support de rangement 20 par rapport au plan de travail sur lequel est posé le boîtier 1. Ainsi l'orientation des logements 40 évolue par rapport à la verticale lorsque le support de rangement 20 est déplacé de la position ouverte lorsque le boîtier 1 occupe la position de rangement, représentée à la figure 3, à la position fermée lorsque le boîtier 1 occupe la position de travail, représentée à la figure 1 ou à la figure 7.

Entre la position de rangement illustrée à la figure 3 et la première position de travail illustrée à la figure 1, le support de rangement 20 est pivoté par rapport au boîtier 1, et donc par rapport au plan de travail sur lequel repose le boîtier 1.

Entre la première position de travail illustrée à la figure 1 et la deuxième position de travail illustrée à la figure 7, le boîtier 1 est pivoté par rapport au plan de travail, et donc le support de rangement 20 est pivoté par rapport au plan de travail sur lequel repose le boîtier 1.

Les logements 40 sont orientés de manière oblique avec leur ouverture 42 vers le haut lorsque le support de rangement 20 est en position verticale représentée aux figures 1 et 2, ou en position horizontale représentée aux figures 3, 4 et 7.

Les logements 40 sont inclinés vers l'extérieur du boîtier 1 en direction de l'ouverture 42 lorsque le support de rangement 20 occupe la position ouverte et que le boîtier 1 occupe la position de rangement, tel que représenté aux figures 3 et 4.

Les ouvertures 42 restent orientées vers le haut lorsque le support de rangement 20 est pivoté de la position ouverte représentée aux figures 3 et 4, dans laquelle le boîtier 1 est en position de rangement à la position fermée représentée aux figures 1 et 2, dans laquelle le boîtier est en position de travail pour le bloc de coupe 4, et vice-versa.

Les ouvertures 42 restent orientées vers le haut lorsque le boîtier 1 est basculé de la position de travail pour le bloc de coupe 4, représentée aux figures 1 et 2, à la position de travail pour l'accessoire presse-agrumes, représentée à la figure 7, et vice-versa.

Pour chaque logement 40 d'accessoire plat 32, 33, 34, au moins une partie de la zone d'appui de fond 41 reste agencée plus bas que l'ouverture 42 lorsque le support de rangement 20 est déplacé de la position ouverte lorsque le boîtier 1 occupe la position de rangement, représentée sur la figure 3, à la position fermée lorsque le boîtier 1 occupe la première position de travail, visible sur la figure 1. De plus, la zone d'appui de fond 41 reste agencée plus bas que l'ouverture 42 lorsque le support de rangement 20 est déplacé de la position fermée lorsque le boîtier 1 occupe la première position de travail, représentée sur la figure 1, à la position fermée lorsque le boîtier 1 occupe la deuxième position de travail, représentée sur la figure 7.

Ainsi les accessoires plats 32, 33, 34 restent dans leur logement 40 lors des déplacements du support de rangement 20 par rapport au plan de travail sur lequel est posé le boîtier 1.

En d'autres termes, les accessoires plats 32, 33, 34 restent en place dans les logements 40 lors des mouvements du support de rangement 20 par rapport au boîtier 1 et/ou du boîtier 1 par rapport au plan de travail recevant ledit boîtier 1.

La souplesse des parois frontales latérales du support de rangement 20 permet l'engagement et le désengagement des organes de blocage 23 des organes d'arrêt 12.

A titre d'exemple de réalisation complémentaire, non représenté aux figures, le support de rangement pourrait être monté pivotant selon un axe vertical par rapport à la position de rangement du boîtier, correspondant à une première position de travail, le boîtier étant configuré basculant vers une deuxième position de travail. Le support de rangement 20 pourrait être remplacé par un support de rangement monté de la manière précitée, les logements restant conçus tels qu'au moins une partie de la zone d'appui de fond reste agencée plus bas que l'ouverture lorsque le support de rangement est déplacé de la position ouverte lorsque le boîtier occupe la position de rangement à la position fermée lorsque le boîtier occupe la position de travail. Par exemple les logements pourraient présenter l'inclinaison des logements 40 lorsque le support de travail 20 est en position fermée.

A titre de variante le boîtier 1 peut présenter une seule position de travail, ou plus de deux positions de travail.

A titre de variante le boîtier 1 n'est pas nécessairement configuré basculant.

A titre de variante, le support de rangement 20, ou le support de rangement de l'exemple de réalisation complémentaire, n'est pas nécessairement monté pivotant par rapport au boîtier 1. Le support de rangement pourrait par exemple être monté coulissant dans le boîtier 1. Le boîtier 1 présentant deux positions de travail, l'orientation des logements d'un support de rangement coulissant évolue par rapport à la verticale lorsque ledit support de rangement coulissant est déplacé de la position ouverte lorsque le boîtier coulissant occupe la position de rangement à la position fermée lorsque le boîtier coulissant occupe la position de travail distincte de la position de rangement, représentée à la figure 7.

A titre de variante, le support de rangement peut comprendre un seul logement 40 prévu pour recevoir un accessoire plat, ou au moins un logement prévu pour recevoir un accessoire plat.

La présente invention n'est nullement limitée aux exemples de réalisation décrits et à leurs variantes, mais englobe de nombreuses modifications dans le cadre des revendications.

## Revendications

1. Boîtier (1) d'appareil électroménager de préparation culinaire comportant un support de rangement (20) comprenant un logement (40) prévu pour recevoir un accessoire plat (32, 33, 34) rangé sur la tranche, le logement (40) présentant une zone d'appui de fond (41) et une ouverture (42) prévue pour l'introduction de l'accessoire plat (32, 33, 34), le support de rangement (20) étant monté pivotant par rapport au boîtier (1), le support de rangement (20) étant susceptible d'occuper une position fermée et une position ouverte, le boîtier (1) étant susceptible d'occuper une position de travail correspondant à une position de rangement dans laquelle le support de rangement (20) est accessible, **caractérisé en ce que** l'orientation du logement (40) évolue par rapport à la verticale lorsque le support de rangement (20) est déplacé de la position ouverte à la position fermée, et **en ce qu'**au moins une partie de la zone d'appui de fond (41) reste agencée plus bas que l'ouverture (42) lorsque le support de rangement (20) est déplacé de la position ouverte à la position fermée.

2. Boîtier (1) d'appareil électroménager de préparation culinaire selon la revendication 1, **caractérisé en ce que** le logement (40) est incliné vers l'extérieur du boîtier (1) en direction de l'ouverture (42) lorsque le support de rangement (20) occupe la position ouverte.

3. Boîtier (1) d'appareil électroménager de préparation culinaire selon l'une des revendications 1 ou 2, **caractérisé en ce que** le support de rangement (20) est monté pivotant par rapport au boîtier (1) selon un axe non-vertical par rapport à la position de rangement.

4. Boîtier (1) d'appareil électroménager de préparation culinaire selon la revendication 3, **caractérisé en ce que** le support de rangement (20) est monté pivotant par rapport au boîtier (1) selon un axe horizontal par rapport à la position de rangement.

5. Boîtier (1) d'appareil électroménager de préparation culinaire selon l'une des revendications 3 ou 4, **caractérisé en ce que** le support de rangement (20) pivote vers le bas pour atteindre la position ouverte.

6. Boîtier (1) d'appareil électroménager de préparation culinaire selon l'une des revendications 3 à 5, **caractérisé en ce que** le boîtier (1) comporte deux pivots (10) prévus pour être engagés chacun dans un siège (21) ménagé sur le support de rangement (20), chaque siège (21) étant prolongé par un dégagement (22) orienté vers le bas à partir dudit siège (21) lorsque le support de rangement (20) est en position ouverte.

7. Boîtier (1) d'appareil électroménager de préparation culinaire selon l'une des revendications 3 à 5, **caractérisé en ce que** le support de rangement (20) comporte deux pivots prévus pour être engagés chacun dans un siège ménagé sur le boîtier (1), chaque siège étant prolongé par un dégagement orienté vers le haut à partir dudit siège lorsque le boîtier est en position de rangement.

8. Boîtier (1) d'appareil électroménager de préparation culinaire selon l'une des revendications 1 à 7, **caractérisé en ce que** le support de rangement (20) comporte un organe de blocage (23) prévu pour coopérer avec un organe d'arrêt (12) issu du boîtier (1) lorsque le support de rangement (20) occupe la position fermée.

9. Boîtier (1) d'appareil électroménager de préparation culinaire selon l'une des revendications 1 à 8, **caractérisé en ce que** le boîtier (1) est configuré basculant entre une première configuration dans laquelle le support de rangement (20) est disposé sur une face latérale du boîtier (1) et une deuxième configuration dans laquelle le support de rangement (20) est disposé sous une face d'appui du boîtier (1).

10. Boîtier (1) d'appareil électroménager de préparation culinaire selon l'une des revendications 1 à 9, **caractérisé en ce que** l'orientation du logement (40) évolue par rapport à la verticale lors des déplacements du support de rangement (20) par rapport au plan de travail sur lequel est posé le boîtier (1).

11. Appareil électroménager de préparation culinaire comprenant un accessoire plat (32, 33, 34) et un boîtier (1) selon l'une des revendications 1 à 10.

12. Appareil électroménager de préparation culinaire selon la revendication 11, **caractérisé en ce que** l'accessoire plat (32, 33, 34) en place dans le logement (40) dépasse partiellement du logement (40).

13. Appareil électroménager de préparation culinaire selon l'une des revendications 11 ou 12, **caractérisé en ce que** la profondeur du logement (40) est inférieure à la moitié de la hauteur de l'accessoire plat (32, 33, 34).

14. Appareil électroménager de préparation culinaire selon l'une des revendications 11 à 13, **caractérisé en ce que** l'accessoire plat (32, 33, 34) est en forme de disque.

## Patentansprüche

1. Gehäuse (1) eines elektrischen Haushaltsgeräts zur Nahrungsmittelzubereitung, das einen Aufbewahrungsträger (20) umfasst, der eine Aufnahme (40) umfasst, die vorgesehen ist, um ein flaches Zubehörteil (32, 33, 34) aufzunehmen, das an dem Rand aufbewahrt wird, wobei die Aufnahme (40) einen Bodenauflagebereich (41) und eine Öffnung (42) aufweist, die vorgesehen ist, um das flache Zubehörteil (32, 33, 34) einzuführen, wobei der Aufbewahrungsträger (20) relativ zu dem Gehäuse (1) schwenkbar angebracht ist, wobei der Aufbewahrungsträger (20) fähig ist, eine geschlossene Position und eine offene Position einzunehmen, wobei das Gehäuse (1) fähig ist, eine Arbeitsposition einzunehmen, die der Aufbewahrungsposition entspricht, in der der Aufbewahrungsträger (20) zugänglich ist, **dadurch gekennzeichnet, dass** sich die Ausrichtung der Aufnahme (40) relativ zu der Vertikalen ändert, , wenn der Aufbewahrungsträger (20) von der offenen Position zu der geschlossenen Position verschoben wird, und dass mindestens ein Teil des Bodenauflagebereichs (41) tiefer angeordnet bleibt als die Öffnung (42), wenn der Aufbewahrungsträger (20) von der offenen Position zu der geschlossenen Position verschoben wird,

2. Gehäuse (1) eines elektrischen Haushaltsgeräts zur Nahrungsmittelzubereitung nach Anspruch 1, **dadurch gekennzeichnet, dass** die Aufnahme (40) zu der Außenseite des Gehäuses (1) in Richtung der Öffnung (42) geneigt ist, wenn der Aufbewahrungsträger (20) die offene Position einnimmt.

3. Gehäuse (1) eines elektrischen Haushaltsgeräts zur Nahrungsmittelzubereitung nach einem der Ansprüche 1 oder 2, **dadurch gekennzeichnet, dass** der Aufbewahrungsträger (20) relativ zu dem Gehäuse (1) entlang einer nicht vertikalen Achse relativ zu der Aufbewahrungsposition schwenkbar angebracht ist.

4. Gehäuse (1) eines elektrischen Haushaltsgeräts zur Nahrungsmittelzubereitung nach Anspruch 3, **dadurch gekennzeichnet, dass** der Aufbewahrungsträger (20) relativ zu dem Gehäuse (1) entlang einer horizontalen Achse relativ zu der Aufbewahrungsposition schwenkbar angebracht ist.

5. Gehäuse (1) eines elektrischen Haushaltsgeräts zur Nahrungsmittelzubereitung nach einem der Ansprüche 3 oder 4, **dadurch gekennzeichnet, dass** der Aufbewahrungsträger (20) nach unten geschwenkt wird, um die offene Position zu erreichen.

6. Gehäuse (1) eines elektrischen Haushaltsgeräts zur Nahrungsmittelzubereitung nach einem der Ansprüche 3 bis 5, **dadurch gekennzeichnet, dass** das Gehäuse (1) zwei Gelenke (10) umfasst, die vorgesehen sind, um jeweils in einem Sitz (21) einzugreifen, der in dem Aufbewahrungsträger (20) ausgebildet ist, wobei jeder Sitz (21) durch einen Freiraum (22) verlängert ist, der ausgehend von dem Sitz (21) nach unten ausgerichtet ist, wenn der Aufbewahrungsträger (20) in der offenen Position ist.

7. Gehäuse (1) eines elektrischen Haushaltsgeräts zur Nahrungsmittelzubereitung nach einem der Ansprüche 3 bis 5, **dadurch gekennzeichnet, dass** der Aufbewahrungsträger (20) zwei Gelenke umfasst, die vorgesehen sind, um jeweils in einem Sitz einzugreifen, der in dem Gehäuse (1) ausgebildet ist, wobei jeder Sitz durch einen Freiraum verlängert ist, der ausgehend von dem Sitz nach oben ausgerichtet ist, wenn das Gehäuse in der Aufbewahrungsposition ist.

8. Gehäuse (1) eines elektrischen Haushaltsgeräts zur Nahrungsmittelzubereitung nach einem der Ansprüche 1 bis 7, **dadurch gekennzeichnet, dass** der Aufbewahrungsträger (20) ein Blockierelement (23) umfasst, das vorgesehen ist, um mit einem Stoppelement (12) zusammenzuwirken, das aus dem Gehäuse (1) hervorgeht, wenn der Aufbewahrungsträger (20) die geschlossene Position einnimmt.

9. Gehäuse (1) eines elektrischen Haushaltsgeräts zur Nahrungsmittelzubereitung nach einem der Ansprüche 1 bis 8, **dadurch gekennzeichnet, dass** das Gehäuse (1) konfiguriert ist, zwischen einer ersten Konfiguration, in der der Aufbewahrungsträger (20) an einer Seitenfläche des Gehäuses (1) angeordnet ist, und einer zweiten Konfiguration zu kippen, in der der Aufbewahrungsträger (20) unterhalb einer Auflagefläche des Gehäuses (1) angeordnet ist.

10. Gehäuse (1) eines elektrischen Haushaltsgeräts zur Nahrungsmittelzubereitung nach einem der Ansprüche 1 bis 9, **dadurch gekennzeichnet, dass** sich die Ausrichtung des Gehäuses (40) relativ zu der Vertikalen während der Verschiebungen des Aufbewahrungsträgers (20) relativ zu der Arbeitsebene ändert, auf der das Gehäuse (1) angeordnet ist.

11. Elektrisches Haushaltsgerät zur Nahrungsmittelzubereitung, das ein flaches Zubehörteil (32, 33, 34) und ein Gehäuse (1) nach einem der Ansprüche 1 bis 10 umfasst.

12. Elektrisches Haushaltsgerät zur Nahrungsmittelzubereitung nach Anspruch 11, **dadurch gekennzeichnet, dass** das flache Zubehörteil (32, 33, 34) in der Aufnahme (40) positioniert teilweise aus der Aufnahme (40) hervorsteht.

13. Elektrisches Haushaltsgerät zur Nahrungsmittelzubereitung nach einem der Ansprüche 11 oder 12, **dadurch gekennzeichnet, dass** die Tiefe des Gehäuses (40) weniger als die Hälfte der Höhe des flachen Zubehörteils (32, 33, 34) ist.

14. Elektrisches Haushaltsgerät zur Nahrungsmittelzubereitung nach einem der Ansprüche 11 bis 13, **dadurch gekennzeichnet, dass** das flache Zubehörteil (32, 33, 34) scheibenförmig ist.

## Claims

1. Case (1) of a household appliance for food preparation including a storage support (20) comprising a housing (40) designed to take a flat accessory (32, 33, 34) stored on edge, the housing (40) having a bottom support zone (41) and an opening (42) designed for the introduction of the flat accessory (32, 33, 34), the storage support (20) being mounted pivoting in relation to the case (1), the storage support (20) being capable of occupying a closed position and an open position, the case (1) being capable of occupying a work position corresponding to a storage position wherein the storage support (20) is accessible, **characterised in that** the orientation of the housing (40) changes in relation to the vertical when the storage support (20) is moved from the open position to the closed position, and **in that** at least one part of the bottom support zone (41) remains arranged lower than the opening (42) when the storage support (20) is moved from the open position to the closed position.

2. Case (1) of a household appliance for food preparation according to claim 1, **characterised in that** the housing (40) is inclined to the exterior of the case (1) in the opening direction (42) when the storage support (20) occupies the open position.

3. Case (1) of a household appliance for food preparation according to any one of claims 1 or 2, **characterised in that** the storage support (20) is mounted pivoting in relation to the case (1) in a non-vertical axis in relation to the storage position.

4. Case (1) of a household appliance for food preparation according to claim 3, **characterised in that** the storage support (20) is mounted pivoting in relation to the case (1) in a horizontal axis in relation to the storage position.

5. Case (1) of a household appliance for food preparation according to any one of claims 3 or 4, **characterised in that** the storage support (20) pivots downwards to reach the open position.

6. Case (1) of a household appliance for food preparation according to any one of claims 3 to 5, **characterised in that** the case (1) comprises two pivots (10) designed to be each engaged in a seat (21) made on the storage support (20), each seat (21) being extended by a recess (22) oriented downwards from said seat (21) when the storage support (20) is in open position.

7. Case (1) of a household appliance for food preparation according to any one of claims 3 to 5, **characterised in that** the storage support (20) comprises two pivots designed to be each engaged in a seat made on the case (1), each seat being extended by a recess oriented upwards from said seat when the case is in storage position.

8. Case (1) of a household appliance for food preparation according to any one of claims 1 to 7, **characterised in that** the storage support (20) comprises a locking device (23) designed to cooperate with a stop device (12) from the case (1) when the storage support (20) occupies the closed position.

9. Case (1) of a household appliance for food preparation according to any one of claims 1 to 8, **characterised in that** the case (1) is configured to be tipping between a first configuration wherein the storage support (20) is arranged on one side face of the case (1) and a second configuration wherein the storage support (20) is arranged under a support face of the case (1).

10. Case (1) of a household appliance for food preparation according to any one of claims 1 to 9, **characterised in that** the orientation of the housing (40) changes in relation to the vertical during the movements of the storage support (20) in relation to the work top onto which the case (1) is placed.

11. Household appliance of food preparation comprising a flat accessory (32, 33, 34) and a case (1) according to any one of claims 1 to 10.

12. Household appliance of food preparation according to claim 11, **characterised in that** the flat accessory (32, 33, 34) in place in the housing (40) partially extends from the housing (40).

13. Household appliance for food preparation according to any one of claims 11 or 12, **characterised in that** the depth of the housing (40) is less than half of the height of the flat accessory (32, 33, 34).

14. Household appliance for food preparation according to any one of claims 11 to 13, **characterised in that** the flat accessory (32, 33, 34) is in the form of a disc.
